(19) Europäisches Patentamt
European Patent Office
Office européen des brevets

(11) EP 2 704 917 B1

(12) EUROPÄISCHE PATENTSCHRIFT

(45) Veröffentlichungstag und Bekanntmachung des Hinweises auf die Patenterteilung:
16.09.2015 Patentblatt 2015/38

(21) Anmeldenummer: 12706484.8

(22) Anmeldetag: 28.02.2012

(51) Int Cl.:
B60L 3/10 (2006.01)     B60K 7/00 (2006.01)

(86) Internationale Anmeldenummer:
PCT/EP2012/000852

(87) Internationale Veröffentlichungsnummer:
WO 2012/152347 (15.11.2012 Gazette 2012/46)

(54) **EINRICHTUNG ZUR ANTRIEBSSCHLUPFREGELUNG FÜR EIN FAHRZEUG MIT ELEKTROMOTORISCHEM FAHRZEUGANTRIEB**

ANTI-SKID CONTROL DEVICE FOR A VEHICLE HAVING AN ELECTROMOTIVE DRIVE SYSTEM

DISPOSITIF DE RÉGULATION D'ANTIPATINAGE À LA TRACTION POUR UN VÉHICULE À ENTRAÎNEMENT ÉLECTROMOTEUR

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 06.05.2011 DE 102011100814

(43) Veröffentlichungstag der Anmeldung:
12.03.2014 Patentblatt 2014/11

(73) Patentinhaber: Audi AG
85045 Ingolstadt (DE)

(72) Erfinder:
• LOOS, Sebastian
85049 ingolstadt (DE)

• HIRSCHMANN, Dirk
85221 Dachau (DE)
• KLEICKMANN, Bodo
85049 Ingolstadt (DE)

(74) Vertreter: Wohnert, Dietmar
Audi AG
Patentabteilung
85045 Ingolstadt (DE)

(56) Entgegenhaltungen:
EP-A1- 0 085 394     EP-A1- 0 521 162
EP-A2- 0 486 996     WO-A1-97/08008
DE-A1- 19 732 460

**Beschreibung**

Die Erfindung betrifft eine Einrichtung zur Antriebsschlupfregelung für ein Fahrzeug mit elektromotorischem Fahrzeugantrieb gemäß Oberbegriff des Patentanspruchs 1, wie aus DE-A-197 32 460 bekannt ist.

Einrichtungen zur Antriebsschlupfregelung (ASR) sind dazu bestimmt, das Durchdrehen der Antriebsräder beim Beschleunigen zu verhindern. Dabei wird angestrebt, dass einerseits eine möglichst gute Beschleunigung für das Fahrzeug erreicht wird, und andererseits dessen Fahrstabilität beim Beschleunigen nicht unnötig stark beeinträchtigt wird. Die Antriebsschlupfregelung soll dabei dafür sorgen, dass bei einem Fahrzeug mit Heckantrieb ein Ausbrechen des Hecks verhindert wird und bei einem Fahrzeug mit Frontantrieb die Lenkfähigkeit erhalten bleibt.

Wird der Radschlupf beim Beschleunigen zu groß, kann mittels einer Antriebsschlupfregelung grundsätzlich auf zwei Arten eingegriffen werden. Zunächst kann über die Motorsteuerung das Motormoment reduziert werden, wenn beispielsweise die Antriebsachse insgesamt einen zu hohen Schlupf aufweist. Tritt der Schlupf jedoch nur an einem Antriebsrad auf oder ist der Schlupf zu groß, kann durch einen Bremseneingriff der Schlupf reduziert werden. Eine Antriebsschlupfregelung mittels Bremseneingriff hat jedoch den Nachteil, dass die Antriebsräder oftmals zu stark abgebremst werden und somit Traktionspotential verloren geht.

Elektromotorische Fahrzeugantriebe, die als Antriebsmotoren elektrische Maschinen verwenden, die sowohl im Motorbetrieb als auch im Generatorbetrieb betrieben werden können, haben ein durch die Lorentzkraft erzeugtes Drehmoment, welches zum Beschleunigen einen positiven Wert und zum Bremsen einen negativen Wert einnimmt. Die Lorentzkraft ist proportional zum Kreuzprodukt aus dem Strom im Stator und dem magnetischen Fluss, der sowohl Stator als auch Rotor durchsetzt. Daraus ergibt sich, dass das Drehmoment in einer elektrischen Maschine nicht nur durch die Veränderung des Stroms und des magnetischen Flusses veränderbar ist, sondern auch durch den Winkel, den die beiden vektoriellen Größen zueinander haben. Bei der Regelung elektrischer Maschinen wird daher die Spannung an den Klemmen der Maschine so verändert, dass das aus dem Kreuzprodukt resultierende Drehmoment den geforderten Wert annimmt. In welcher Weise die drei Größen angepasst werden bzw. angepasst werden können, hängt stark vom jeweiligen Maschinentyp ab. Bei Drehfeldmaschinen läuft zur Erzeugung eines Drehmoments der Stromvektor mit der gleichen Geschwindigkeit, wie das magnetische Feld (Drehfeld) im Stator um. Bei Synchronmaschinen ist die Richtung des Rotorfelds durch dessen Aufbau fest vorgegeben. Um eine konstante Kraft zu erzeugen, muss sich der Rotor daher mit der gleichen Geschwindigkeit drehen, wie der Strom im Stator umläuft. Falls der Strom dem Feld vorauseilt, ergibt sich ein positives Drehmoment (Beschleunigung), und falls er dem Feld nacheilt, ergibt sich ein negatives Drehmoment (Bremsen).

Aus der WO 97/08008 ist ein Antriebsschlupfsteuerungssystem für ein Kraftfahrzeug unter Verwendung einer elektrischen Maschine bekannt, bei dem zur Antriebsschlupfregelung (ASR) der elektrischen Maschine ein Drehmoment vorgegeben wird. Die Antriebsschlupfregelung wird dabei erst dann aktiv, wenn das Überschreiten eines Grenzwertes des Antriebsschlupfs festgestellt wird.

Aus der DE 197 32 460 A1 ist ein Verfahren zur Regelung eines Mehrmotorenantriebs mit einem gemeinsamen Umrichter zur Ansteuerung der Antriebsmotoren bekannt. Die Umrichter-Ausgangsfrequenz orientiert sich bei diesem bekannten Verfahren an den Drehzahlen der Antriebsräder, die einen guten Kontakt zur Straße haben. Damit soll ein Weglaufen der Unmrichter-Ausgangsfrequenz bei Beschleunigungsvorgängen, bedingt durch das Durchdrehen von mindestens einem Antriebsrad, verhindert werden. Die Antriebsräder mit gutem Kontakt zur Straße sorgen dann für eine Beschleunigung des Fahrzeugs.

Der Erfindung liegt die Aufgabe zugrunde, eine Einrichtung zur Antriebsschlupfregelung für ein Fahrzeug mit elektromotorischem Fahrzeugantrieb zu schaffen, mit dem möglichst gute Beschleunigungswerte für das Fahrzeug erreicht werden können.

Die Lösung dieser Aufgabe wird durch die im Patentanspruch 1 angegebenen Merkmale erhalten. Bevorzugte Weiterbildungen der Erfindung sind in den Unteransprüchen offenbart.

Jeder elektrische Antriebsmotor wird erfindungsgemäß von einem ihm zugeordneten Umrichter gespeist, der seinerseits zur Drehfeldsteuerung von einem ASR-Steuergerät (ASR = Antriebsschlupfregelung) ständig die maximale Drehzahl des zugehörigen Antriebsrads mitgeteilt bekommt. Die maximale Drehzahl wird dabei so gewählt, das der Schlupf vorzugsweise in einem Bereich zwischen 10% bis 20% liegt, das heißt die maximale Drehzahl wird so vorgegeben, dass die Umlaufgeschwindigkeit des Antriebsrads maximal 10% bis 20% höher ist als die Fahrgeschwindigkeit des Fahrzeugs. Alle Drehzahlen unterhalb dieser maximal vorgegebenen Drehzahl sind dabei zulässig. Sollte bei dem elektromotorischen Fahrzeugantrieb die Drehzahl des Antriebsmotors mit dem zugehörigen Antriebsrad nicht übereinstimmen, weil ein Getriebe zwischengeschaltet ist, so kann dem Umrichter anstelle der Drehzahl des Antriebsrads auch die Drehzahl des Antriebsmotors vom ASR-Steuergerät übermittelt werden.

Damit gegebenenfalls im Umrichter ein Vergleich zwischen maximalem Sollwert für die Drehzahl des zugehörigen Antriebsrads und dem Istwert der Drehzahl vorgenommen werden kann, kann dem Umrichter auch zusätzlich dieser Istwert als Vergleichswert übermittelt werden. Eine andere Möglichkeit wäre die, dass im Umrichter direkt die Drehzahldifferenz zwischen dem maximalen Sollwert und dem Istwert der Drehzahl des zugehörigen Antriebsrads übermittelt wird. Wesentlich ist bei sämtlichen Ausführungsvarianten, dass die entsprechende Drehzahlinformation unmittelbar am Umrichter vorliegt, so dass dieser die Ansteuerung des ihm zugeordneten Antriebsmotors so regeln kann, dass eine direkte Drehzahlbegrenzung erfolgen kann, wenn die vorgegebene Schlupfgrenze erreicht ist.

Handelt es sich bei dem elektromotorischen Fahrzeugantrieb um eine Ausführung mit Synchronmaschinen als Antriebsmotoren, kann die Steuerung des Umrichters darauf beschränkt werden, dass dieser das von ihm erzeugte Drehfeld in seiner Drehzahl so begrenzt, dass diese die fahrzustandsabhängige vorgegebene maximale Drehzahl des Antriebsmotors nicht überschreitet. Dies ist deshalb in dieser Weise möglich, da bei Synchronmaschinen das umlaufende Drehfeld immer die gleiche Drehzahl hat, wie der Rotor der Synchronmaschine. Somit ist es in diesem Fall lediglich notwendig, die Drehzahl des Drehfelds so zu begrenzen, dass die vom ASR-Steuergerät vorgegebene Maximaldrehzahl nicht überschritten wird. Ein DrehzahlRegelkreis, wie er bei einer Asynchronmaschine vorzusehen ist, ist hier nicht erforderlich.

Insbesondere bei einem Antriebssystem mit stark unterschiedlichen Antriebsmomenten, wie diese bei Einzelradantrieb auftreten können, sorgt das ASR-Steuergerät auch dafür, dass die Antriebsmomente der nicht an der Schlupfgrenze arbeitenden Antriebsräder auf einen fahrdynamisch akzeptablen Wert limitiert werden. Die Fahrstabilität hat hier also gegenüber einer maximalen Beschleunigung Vorrang. Gerade auch durch den Eingriff eines elektronischen Stabilitätsprogramms kann der Antriebsschlupf bei maximaler Beschleunigung unter den bevorzugten Bereich von 10% bis 20% aus Sicherheitsgründen abgesenkt werden.

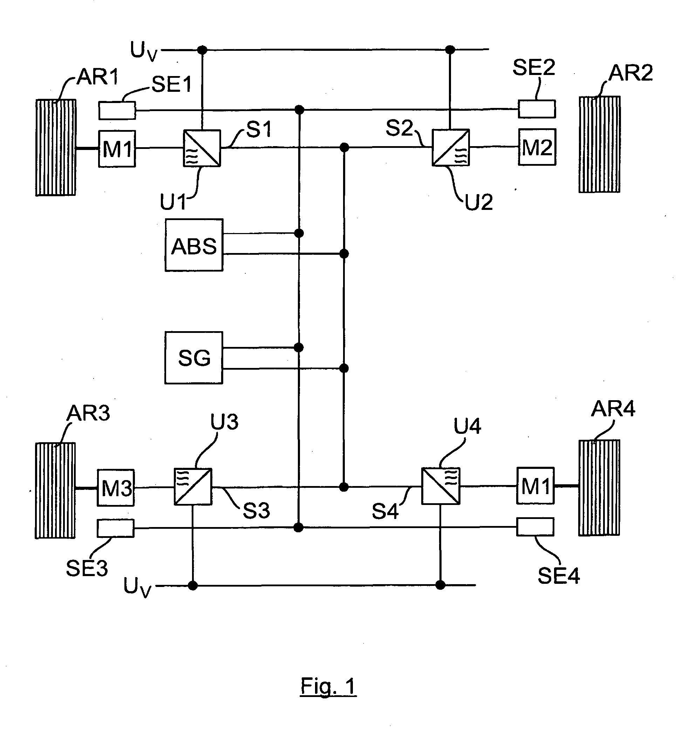

Die Erfindung wird nachfolgend anhand eines in der Zeichnung gemäß Fig.1 dargestellten Blockschaltbildes näher erläutert.

Das in Fig.1 dargestellte Ausführungsbeispiel zeigt das Antriebssystem als Blockschaltbild für ein vierrädriges Fahrzeug mit Einzelradantrieb. Die Antriebsräder AR1 bis AR4 werden von jeweils einem zugeordneten elektrischen Antriebsmotor M1 bis M4 angetrieben. Die Antriebsmotoren M1 bis M4 werden von jeweils zugeordneten Umrichtern U1 bis U4 mit einem Drei-Phasen-Drehstrom gespeist. Eingangsseitig sind die Umrichter U1 bis U4 an die Versorgungsspannung $U_v$ angeschlossen. An Steuereingängen S1 bis S4 sind die Umrichter U1 bis U4 mit einem ASR-Steuergerät ASR und einem weiteren Steuergerät SG verbunden, welches das Motorsteuergerät des Fahrzeugs sein kann. Das ASR-Steuergerät ASR und das Steuergerät SG sind über Steuerleitungen außerdem mit Sensoreinheiten SE1 bis SE4 verbunden, die antriebsspezifische Informationen an die Steuergeräte ASR und SG übertragen. Insbesondere werden von den Sensoreinheiten SE1 bis SE4 die Raddrehzahlen der Antriebsräder AR1 bis AR4 erfasst, mit denen im Steuergerät ASR und/oder SG die Umfangsgeschwindigkeit der Antriebsräder AR1 bis AR4 individuell errechnet werden können. Durch einen Vergleich mit der jeweils aktuellen Fahrgeschwindigkeit des Fahrzeugs kann aus den Umfangsgeschwindigkeiten der Antriebsräder AR1 bis AR4 auf den jeweiligen Antriebsschlupf für jedes der Antriebsräder AR1 bis AR4 geschlossen werden.

Wird beispielsweise vom Steuergerät SG für die aktuelle Fahrsituation ein maximaler Antriebsschlupf von 14 % vorgegeben, so kann daraus die maximale Raddrehzahl $n_{max}$ wie folgt ermittelt werden:

$$n_{max} = v_{max} \, / \, 2\pi r \text{ wobei } v_{max} \text{ die um den vorgegebenen maximalen Schlupf}$$

wobei $v_{max}$ die um den vorgegebenen maximalen Schlupf erhöhte Umfangsgeschwindigkeit der Antriebsräder und r der wirksame Raddurchmesser des jeweiligen Antriebsrads ist.

Bei einer aktuellen Fahrgeschwindigkeit von 25 m/s ergibt sich für einen maximalen Schlupf von 14% im vorliegenden Beispiel eine Geschwindigkeit $v_{max}$ = 28,5 Meter pro Sekunde. Der auf diese Weise ermittelte Wert für die maximale Raddrehzahl $n_{max}$ wird anhand der aktuellen Fahrsituation für jedes der Antriebsräder AR1 bis AR4 individuell ermittelt und vom ASR-Steuergerät ASR an die jeweils zugehörigen Umrichter U1 bis U4 übermittelt. Auf diese Weise erfolgt eine direkte Steuerung der Umrichter U1 bis U4 zur Begrenzung der Raddrehzahl der Antriebsräder AR1 bis AR4.

Den Umrichtern U1 bis U4 kann außer der maximalen momentan zulässigen Raddrehzahl auch der aktuelle Istwert der Raddrehzahl des zugehörigen Antriebsrads über die Steuereingänge S1 bis S4 übermittelt werden, so dass im Umrichter U1 bis U4 ein ständiger Istwert-Sollwert-Vergleich zu Regelzwecken durchgeführt werden kann.

**Patentansprüche**

1. Einrichtung zur Antriebsschlupfregelung für ein Fahrzeug mit elektromotorischem Fahrzeugantrieb, der einen oder mehrere elektrische Antriebsmotoren (M1 bis M4) umfasst, bei dem zur Begrenzung des Antriebsschlupfs durch ein Antriebsschlupfregelungs-Steuergerät (ASR) die Drehzahl der Antriebsräder (AR1 bis AR4) durch Steuerung der Drehzahl des in wenigstens einem elektrischen Antriebsmotor erzeugten Drehfelds geregelt wird, **dadurch gekennzeichnet, dass** jeder elektrische Antriebsmotor (M1 bis M4) von einem ihm zugeordneten steuerbaren Umrichter (U1 bis U4) gespeist wird, und dass zur Drehzahlsteuerung das ASR-Steuergerät (ASR) jedem Umrichter (U1 bis U4) die maximal zulässige Drehzahl des ihm zugeordneten Antriebsmotors (M1 bis M4) oder Antriebsrads (AR1 bis AR4) ständig mitteilt.

2. Einrichtung nach Anspruch 1, **dadurch gekennzeichnet, dass** für eine maximale Beschleunigung des Fahrzeugs ein vom Fahrbetrieb abhängiger maximaler Antriebsschlupf für jedes Antriebsrad (AR1 bis AR4) ermittelt und daraus eine von der aktuellen Fahrgeschwindigkeit abhängige maximale Drehzahl für jedes Antriebsrad (AR1 bis AR4) vorgegeben wird.

3. Einrichtung nach einem der Ansprüche 1 oder 2, **dadurch gekennzeichnet, dass** das ASR-Steuergerät (ASR) die maximale Motordrehzahl der Antriebsmotoren (M1 bis M4) ermittelt und diese an den jeweils zugehörigen Umrichter (U1 bis U4) übermittelt, und dass die Drehzahl des vom Umrichter (U1 bis U4) erzeugten Drehfelds so geregelt wird, dass diese Drehzahl eine vorgegebene maximale Drehzahl nicht übersteigt.

4. Einrichtung nach einem der vorhergehenden Ansprüche, **dadurch gekennzeichnet, dass** bei Verwendung von Synchronmaschinen als Antriebsmotoren (M1 bis M4) die Drehzahl des von einem Umrichter (U1 bis U4) erzeugten Drehfeldes auf die maximale Drehzahl des zugehörigen Antriebsrads (AR1 bis AR4) begrenzt ist.

5. Einrichtung nach einem der vorhergehenden Ansprüche, **dadurch gekennzeichnet, dass** das ASR-Steuergerät (ASR) die Antriebsmomente der Antriebsmotoren (M1 bis M4) auf einen fahrdynamisch akzeptablen Wert begrenzt.

6. Einrichtung nach einem der vorhergehenden Ansprüche, **dadurch gekennzeichnet, dass** für eine maximale Beschleunigung der maximale Antriebsschlupf für jedes Antriebsrad (AR1 bis AR4) auf einen Wert zwischen 10% bis 20% der Fahrgeschwindigkeit des Fahrzeugs begrenzt ist.

## Claims

1. Traction control device for a vehicle with electromotive vehicle drive, which comprises one or more electric drive motors (M1 to M4), wherein in order to limit traction slip by means of a traction control device (ASR) the rotational speed of the drive wheels (AR1 to AR4) is regulated by controlling the speed of the rotary field generated in at least one electric drive motor, **characterised in that** each electric drive motor (M1 to M4) is supplied by a controllable converter (U1 to U4) associated therewith, and in order to control the rotational speed the traction control device (ASR) continuously communicates to each converter (U1 to U4) the maximum permissible rotational speed of the associated drive motor (M1 to M4) or drive wheel (AR1 to AR4).

2. Device according to claim 1, **characterised in that**, for a maximum acceleration of the vehicle, a maximum traction slip is determined for each drive wheel (AR1 to AR4), dependent on the driving operation, and from this a maximum rotational speed for each drive wheel (AR1 to AR4) is determined, dependent on the actual driving speed.

3. Device according to one of claims 1 or 2, **characterised in that** the traction control device (ASR) determines the maximum rotational speed of the drive motors (M1 to M4) and transmits it to the respective associated converter (U1 to U4), and **in that** the speed of the rotary field generated by the converter (U1 to U4) is regulated such that this speed does not exceed a given maximum speed.

4. Device according to one of the preceding claims, **characterised in that**, when synchronous machines are used as drive motors (M1 to M4), the rotational speed of the rotary field generated by a converter (U1 to U4) is limited to the maximum speed of the associated drive wheel (AR1 to AR4).

5. Device according to one of the preceding claims, **characterised in that** the traction control device (ASR) limits the drive torques of the drive motors (M1 to M4) to a value which is acceptable in terms of vehicle dynamics.

6. Device according to one of the preceding claims, **characterised in that** for maximum acceleration the maximum traction slip for each drive wheel (AR1 to AR4) is limited to a value between 10% and 20% of the speed of travel of the vehicle.

**Revendications**

1. Dispositif de régulation du patinage à l'accélération pour un véhicule équipé d'un entraînement à moteur électrique, qui comprend un ou plusieurs moteurs d'entraînement électrique (M1 à M4), dans lequel, pour limiter le patinage à l'accélération, on règle, à l'aide d'un appareil de commande de régulation du patinage à l'accélération (ASR), la vitesse de rotation des roues motrices (AR1 à AR4) par commande de la vitesse de rotation du champ rotatif produit dans au moins un moteur d'entraînement électrique, **caractérisé en ce que** chaque moteur à entraînement électrique (M1 à M4) est alimenté par un convertisseur redresseur réglable (U1 à U4) qui lui est affecté, et **en ce que**, pour commander la vitesse de rotation, l'appareil de commande ASR (ASR) communique en permanence à chaque convertisseur redresseur (U1 à U4) la vitesse de rotation maximale autorisée du moteur d'entraînement (M1 à M4) ou de la roue motrice (AR1 à AR4) qui lui est affecté(e).

2. Dispositif selon la revendication 1, **caractérisé en ce que**, pour une accélération maximale du véhicule, on détermine un patinage à l'accélération maximal en fonction du régime de marche pour chaque roue motrice (AR1 à AR4) et on en déduit une vitesse de rotation maximale en fonction de la vitesse de marche courante pour chaque roue motrice (AR1 à AR4).

3. Dispositif selon l'une quelconque des revendications 1 ou 2, **caractérisé en ce que** l'appareil de commande ASR (ASR) détermine la vitesse de rotation maximale des moteurs d'entraînement (M1 à M4) et transmet celle-ci aux convertisseurs redresseurs respectivement concernés (U1 à U4) et **en ce que** la vitesse de rotation du champ rotatif produit par le convertisseur redresseur (U1 à U4) est réglé de manière que cette vitesse de rotation ne dépasse pas une vitesse de rotation maximale prédéfinie.

4. Dispositif selon l'une quelconque des revendications précédentes, **caractérisé en ce que**, lors de l'utilisation de machines synchrones comme moteurs d'entraînement (M1 à M4), la vitesse de rotation du champ rotatif produit par un convertisseur redresseur (U1 à U4) est limitée à la vitesse de rotation maximale de la roue motrice concernée (AR1 à AR4).

5. Dispositif selon l'une quelconque des revendications précédentes, **caractérisé en ce que** l'appareil de commande ASR (ASR) limite les couples d'entraînement des moteurs d'entraînement (M1 à M4) à une valeur acceptable au plan de la dynamique de marche.

6. Dispositif selon l'une quelconque des revendications précédentes, **caractérisé en ce que**, pour une accélération maximale, le patinage maximal à l'accélération pour chaque roue motrice (AR1 à AR4) est limité à une valeur comprise entre 10 et 20 % de la vitesse de marche du véhicule.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19732460 A
- WO 9708008 A
- DE 19732460 A1